# EUROPÄISCHE PATENTSCHRIFT

(11) **EP 0 361 144 B1**
(45) Veröffentlichungstag und Bekanntmachung des Hinweises auf die Patenterteilung: **07.12.1994**
(21) Anmeldenummer: 89116381.8
(22) Anmeldetag: 05.09.1989
(51) Int. Cl.: H04M 19/00

(54) **Schaltungsanordnung für eine elektronische Teilnehmeranschlussschaltung**
Circuit arrangement for an electronic subscriber connection circuit
Dispositif pour un circuit de raccordement d'abonné électronique

(30) Priorität: 27.09.1988 DE 3832777
(43) Veröffentlichungstag der Anmeldung: 04.04.1990
(73) Patentinhaber: SIEMENS AKTIENGESELLSCHAFT, 80333 München (DE)
(72) Erfinder: Hamer, Jeremy-Paul, D-8000 München 70 (DE)

(56) Entgegenhaltungen:
- EP-A- 0 178 993

## Beschreibung

Die Erfindung betrifft eine Teilnehmeranschlußschaltung gemäß dem Oberbegriff des Patentanspruchs (vgl. z.B. EP-A- 178 993).

Bei den demnach vorausgesetzten Teilnehmeranschlußschaltungen wird durch Anpassung der Speisespannung an die Länge der Teilnehmerleitung eine Reduzierung der Verlustleistung erzielt. Wenn wie ebenfalls vorausgesetzt, die Rufsignalerzeugung durch Zuschaltung einer Zusatzspannung mit der Polarität der Speisespannung entgegengesetzter Polarität erfolgt, kann es dazu kommen, daß entweder die insgesamt zu Verfügung stehende Spannung für einen Ruf nicht mehr ausreichend ist, oder aber, daß die Gesamtspannung die Spannungsfestigkeit der Teilnehmeranschlußschaltung übersteigt. Es wurde bisher daher so vorgegangen, daß die Amplitude der Speisespannung nicht im Hinblick auf die geringstmögliche Verlustleistung gewählt wurde, sondern im Hinblick auf die Anforderungen an die Rufspannung.

Die Aufgabe der vorliegenden Erfindung besteht nun darin, hier günstigere Verhältnisse zu schaffen.

Sie wird durch die im Kennzeichen des Patentanspruchs angegebenen Mittel gelöst.

Da mit der erfindungsgemäßen Schaltungsanordnung die Zusatzspannung von der Speisespannung in der Weise abgeleitet wird, daß immer eine konstante Spannungsdifferenz vorliegt, die den Anforderungen an die Rufspannung genügt, kann die Festlegung der Amplitude der Speisespannung allein auf die Länge der Teilnehmeranschlußleitung im Hinblick auf möglichst geringe Verlustleistung abgestimmt sein, ohne daß eine zu geringe Rufspannung oder ein Überschreiten der Spannungsfestigkeit zu befürchten ist.

Nachstehend wird die Erfindung anhand eines Ausführungsbeispiels unter Bezugnahme auf eine Zeichnung näher erläutert.

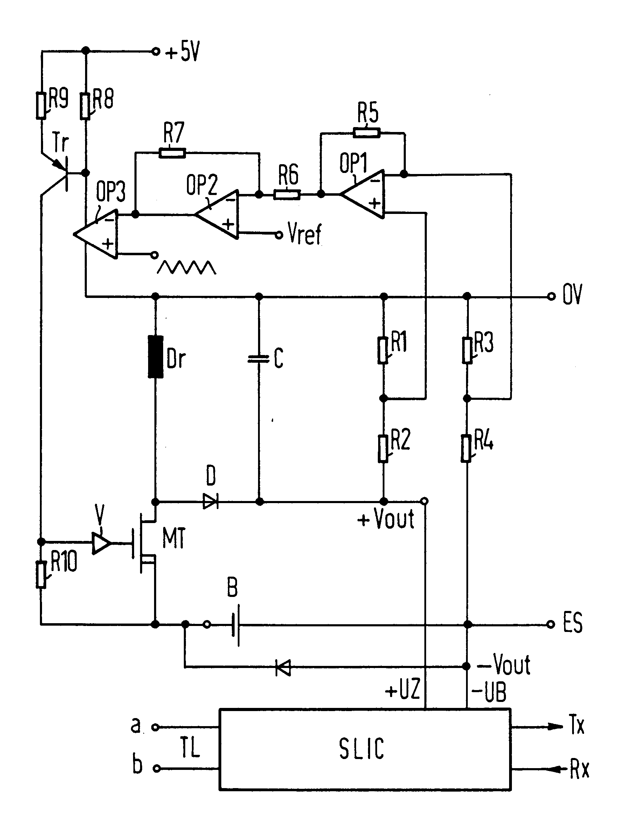

Die Figur zeigt die die Bestandteile zur Teilnehmerleitungsspeisung und Rufanschaltung enthaltende Schnittstellenschaltung SLIC einer Teilnehmeranschlußschaltung, an die auf der linken Seite die Adern a und b einer Teilnehmeranschlußleitung TL angeschlossen zu denken sind und deren auf der rechten Seite gezeichneten Anschlüsse Tx und Rx zu dem Sende- bzw. Empfangszweig einer Vierdrahtleitung führen, die Teil einer zum Koppelfeld der Vermittlungsstelle führenden Verbindung ist, der die gezeigte Teilnehmeranschlußschaltung angehört.

Wie angedeutet, erhält die Schnittstellenschaltung SLIC eine gegen Bezugspotential negative Spannung -UB zur Speisung der Teilnehmeranschlußleitung TL sowie eine gegenüber Bezugspotential positive Spannung +UZ, die, wie angegeben, im Zusammenhang mit der Rufsignalerzeugung zu der Spannung -UB zugeschaltet wird. Die Erzeugung der Speisespannung -UB erfolgt entweder durch eine Batterie B, die wahlweise verschiedene Spannungen liefert, die beim angenommenen Beispiel zwischen -45 V und -75 V je nach der Länge der zu speisenden Teilnehmeranschlußleitung liegen. Alternativ kann diese Spannung auch von einem hier nicht dargestellten Schaltregler geliefert werden, der an den Eingang ES angeschaltet zu denken ist.

Der übrige Teil der oberhalb des Blockes SLIC gezeigten Anordnung stellt einen Schaltregler dar, der der Erzeugung der Zusatzspannung +UZ dient, wobei sichergestellt ist, daß unabhängig von der jeweils eingestellten Amplitude der Speisespannung -UB die Spannungsdifferenz zwischen dieser Speisespannung und der Zusatzspannung +UZ immer konstant ist und beim angenommenen Beispiel 120 V beträgt.

Bestandteil des erwähnten Schaltreglers sind ein Spannungsteiler aus den Widerständen R1 und R2, der zwischen einem Bezugspotential OV führenden Schaltungspunkt und dem Ausgang +Vout der Schaltungsanordnung, an der die positive Zusatzspannung +UZ abgenommen wird, sowie ein zweiter aus den Widerständen R3 und R4 gebildeter Spannungsteiler, der ebenfalls zwischen dem Bezugsspannungspunkt OV sowie dem Ausgang -Vout betrieben wird, an dem die negative Speisespannung -UB abgegeben wird. Die Teilerpunkte dieser Spannungsteiler sind mit jeweils einem Eingang eines ersten Operationsverstärkers OP1 verbunden, dessen Ausgang über einen Widerstand R5 mit dem invertierenden Eingang verbunden ist und der als Differenzverstärker wirkt und demnach eine Ausgangsspannung abgibt, die der Differenz zwischen der Spannung +UZ und -UB proportional ist.

Der Ausgang des Operationsverstärkers OP1 ist über einen Widerstand R6 mit dem invertierenden Eingang eines zweiten Operationsverstärkers OP2 verbunden. Am nichtinvertierenden Eingang dieses Operationsverstärkers liegt eine Referenzspannung Vref. Der Ausgang des Operationsverstärkers OP2 ist über einen Rückkopplungswiderstand R7 mit dem invertierenden Eingang desselben verbunden.

Die dem nichtinvertierenden Eingang des Operationsverstärkers OP2 zugeführte Referenzspannung Vref bestimmt den Wert der Differenz, den die Spannung +UZ und die Spannung -UB immer aufweisen sollen. Er liefert demnach ein der Abweichung von der Solldifferenz proportionales Ausgangssignal.

Der Ausgang des Operationsverstärkers OP2 ist mit dem invertierenden Eingang eines dritten Operationsverstärkers OP3 verbunden, dessen nichtinvertierendem Eingang eine Sägezahnspannung zugeführt wird. Hiermit liefert dieser Operationsverstärker eine Folge von Rechteckimpulsen, deren Impuls-Pausenverhältnis variabel ist und der Abweichung der Spannungsdifferenz der Spannung +UZ und der Spannung -UB von einem vorgegebenen Sollwert entspricht. Das Ausgangssignal des Operationsverstärkers OP3 steuert eine aus einem Transistor Tr und Widerständen R8, R9 und R10 gebildeten Transistorschaltstufe. Die Kollektorspannung des Transistors Tr wird einem Treiberverstärker V zugeführt, der seinerseits die Steuerspannung für einen MOS-FET-Transistor MT liefert, der demnach im Impuls-Pausenverhältnis der genannten Impulsfolge zwischen seinem Sperr- und seinem Leitzustand hin und her gesteuert wird.

Im Arbeitsstromkreis MOS-FET-Transistors MT liegt eine Drossel Dr, die gegen Bezugspotential OV geschaltet ist. Von den durch die Stromunterbrechung durch den Transistor MT induzierten Spannungen wird lediglich die positive Halbwelle durch die an die eine Hauptelektrode des MOS-FET-Transistors angeschlossene Diode D durchgelassen. Sie wird den durch an dessen Kathode sowie an Bezugspotential liegenden Glättungskondensator C geglättet, womit an der Ausgangsklemme +Vout eine gegenüber dem Bezugspotential positive Spannung abgenommen werden kann, die die dem Teil SLIC der Teilnehmeranschlußschaltung zuzuführende Spannung +UZ darstellt.

## Patentansprüche

1. Teilnehmeranschlußschaltung, in der zur Teilnehmerleitungsspeisung eine der Leitungslänge angepaßte Speisespannung (-UB) zur Verfügung gestellt wird und zum Zwecke der Rufsignalerzeugung eine gegenüber der Speisespannung entgegengesetzte Polarität bezüglich eines Bezugspotentials aufweisende Zusatzspannung (+UZ) bezüglich eines Bezugspotentials zugeschaltet werden kann, **gekennzeichnet** durch einen Schaltregler zur Erzeugung der Zusatzspannung (+UZ) aus der Speisespannung (-UB), der eine konstante Spannungsdifferenz zwischen der Zusatzspannung und der jeweiligen Speisespannung aufrecht erhält.

## Claims

1. Subscriber line circuit in which a power-feeding voltage (-UB) adapted to the line length is provided for feeding the subscriber line and an additional voltage (+UZ) exhibiting a polarity opposite to the power-feeding voltage with respect to a reference potential can be added with respect to a reference potential for the purpose of generating the ringing signal, characterized by a switched-mode controller for generating the additional voltage (+UZ) from the power-feeding voltage (-UB), which controller maintains a constant voltage difference between the additional voltage and the respective power-feeding voltage.

## Revendications

1. Circuit de raccordement d'abonné, dans lequel pour l'alimentation de la ligne d'abonné on dispose d'une tension d'alimentation (-UB) adaptée à la longueur de la ligne et, pour la production d'un signal d'appel, d'une tension supplémentaire (+UZ), qui possède, par rapport à un potentiel de référence, une polarité opposée à celle de la tension d'alimentation, peut être mise en circuit par rapport à un potentiel de référence, caractérisé par un régulateur de commutation qui sert à produire la tension supplémentaire (+UZ) à partir de la tension d'alimentation (-UB) et qui maintient une différence constante de tension entre la tension supplémentaire et la tension d'alimentation respective.
